# EUROPÄISCHE PATENTANMELDUNG

(11) **EP 1 445 193 A1**
(43) Veröffentlichungstag der Anmeldung: **11.08.2004**
(21) Anmeldenummer: 04002469.7
(22) Anmeldetag: 04.02.2004
(51) Int. Cl.: B64C 11/00, B64C 11/14, B64C 11/48

(54) **Turbopropantrieb mit zwei mitläufigen und axial versetzten Propeller**

(30) Priorität: 10.02.2003 DE 10305352
(71) Anmelder: Rolls-Royce Deutschland Ltd & Co KG, 15827 Dahlewitz (DE)
(72) Erfinder: Negulescu, Dimitrie, 14163 Berlin (DE)
(74) Vertreter: Weber, Joachim, Dr.

(57) **Zusammenfassung**

Die Erfindung bezieht sich auf ein Propeller-Turbinen-Luftstrahltriebwerk mit einem Luftstrahltriebwerk, welches ein Getriebe und eine Propellernabe (1) umfasst, wobei auf der Propellernabe (1) axial versetzt zwei Propeller (2,3) angeordnet sind, welche sich in derselben Drehrichtung drehen.

## Beschreibung

Die Erfindung bezieht sich auf einen Turbopropantrieb bzw. ein Propeller-Turbinen-Luftstrahltriebwerk (PTL) gemäß dem Oberbegriff des Hauptanspruchs.

Aus dem Stand der Technik sind unterschiedlichste Ausgestaltungen von PTL-Triebwerken (Propeller-Turbinen-Luftstrahl-triebwerken) vorbekannt. Dabei wird ein Propeller mittels eines Getriebes von der Antriebswelle eines Luftstrahltriebwerks angetrieben. Hierdurch wird die Wellenleistung des Triebwerks in Schub umgewandelt. Um ausreichende Leistungen umsetzen zu können, muss der Propeller entsprechend große Blattspitzen- und Blattnabendurchmesser haben. Weiterhin ist eine große Anzahl von Propellerblättern erforderlich, die entsprechend breitsehnig sind. Als Nachteil erweist es sich, dass die Propellernabe ausreichend groß dimensioniert werden muss, um den Verstellmechanismus für die Propellerblätter unterbringen zu können. Dabei stößt die benötigte Größe der Propellernaben an konstruktive Grenzen, da sich zum einen ein unerwünscht hohes Gewicht ergibt und da zum anderen die Triebwerkaufhängung insgesamt sehr aufwendig wird.

Ein weiterer Nachteil vorbekannter PTL-Triebwerke besteht darin, dass bei sehr hohen Leistungen, beispielsweise mehr als 8.000 PS auf einer einzigen Propellerstufe, die Druckverluste im Triebwerkeinlauf sehr groß werden. Hierdurch ergibt sich das Risiko von Strömungsinstabilitäten im Verdichtereintritt.

Der Stand der Technik schlägt deshalb vor, koaxial gegenläufige Propeller zu verwenden. Derartige Propeller-Konfigurationen führen jedoch zu schweren und kompliziert ausgestalteten Konstruktionen der Propellernaben. Weiterhin ergibt sich ein hohes Geräuschniveau, welches unerwünscht ist.

Der Erfindung liegt die Aufgabe zugrunde, einen Turbopropantrieb der eingangs genannten Art zu schaffen, welcher unter Vermeidung der Nachteile des Standes der Technik bei hohen Leistungen einen guten Gesamtwirkungsgrad des Antriebsystems aufweist.

Erfindungsgemäß wird die Aufgabe durch die Merkmalskombination des Hauptanspruchs gelöst. Die Unteransprüche zeigen weitere vorteilhafte Ausgestaltungen der Erfindung.

Erfindungsgemäß ist somit vorgesehen, dass auf der Propellernabe axial versetzt zueinander zwei Propeller angeordnet sind, welche sich in derselben Drehrichtung drehen. Die Propellernabe treibt somit zwei Propeller an, die, da sie auf derselben Nabe montiert sind, dieselbe Drehzahl aufweisen.

Besonders günstig ist es, wenn die beiden Propeller die gleiche Blattzahl aufweisen und entsprechend axial zueinander auf der Propellernabe versetzt angeordnet sind.

In einer besonders günstigen Ausgestaltung der Erfindung ist vorgesehen, dass die beiden Propeller zur aerodynamischen Optimierung in Umfangsrichtung zueinander versetzt angeordnet sind. Hierdurch verbessern sich die Strömungsverhältnisse an den Propellerblättern.

Besonders günstig ist es, wenn beide Propeller kontinuierlich regelbare und untereinander gekoppelte Mechanismen zur Verstellung der Propellerblätter aufweisen.

Um die Strömungsverhältnisse zu optimieren, ist es in Weiterbildung der Erfindung vorteilhaft, wenn die Propellernabe zwischen den beiden Propellern mit einem ringförmigen Grenzschichtabsaugeinlauf versehen ist. Dieser sekundäre Grenzschichtabsaugeinlauf sichert eine hohe Einlaufeffizienz des stromab liegenden PTL-Lufteinlasses. Weiterhin ist der Grenzschichtabsaugeinlauf ein sehr wirkungsvoller Partikelseparator für den PTL-Lufteinlass.

Erfindungsgemäß ergibt sich weiterhin der Vorteil, dass die Stirnfläche des axial versetzten mitläufigen Zweistufenpropellers sowie auch die Stirnfläche der hierzu benötigten Naben-Bereiche nur ca. 60 % der betreffenden Flächen eines leistungsgleichen konventionellen Einstufenpropellers betragen. Hierdurch sinkt zum einen der Strömungswiderstand. Zum anderen ist es möglich, erhebliches Gewicht einzusparen.

Ein weiterer Vorteil ergibt sich erfindungsgemäß dadurch, dass das nötige Untersetzungsverhältnis des Propellergetriebes kleiner sein kann, verglichen mit dem Stand der Technik. Auch hierdurch ergibt sich eine Gewichtsreduzierung sowie eine Reduzierung der Dimensionierung.

Bei Verwendung der erfindungsgemäßen Propeller-Ausgestaltung können unterschiedlichste Triebwerkslufteinlässe zur Anwendung kommen. So ist es möglich, NACA-Einlässe zu verwenden, deren Eintrittskanten zur Propelleraustrittsdrallströmung angestellt sind. Es ist jedoch erfindungsgemäß auch möglich, Ringeinlässe (annular inlet) oder auch versetzte Frontaleinlässe (scoop inlet) vorzusehen.

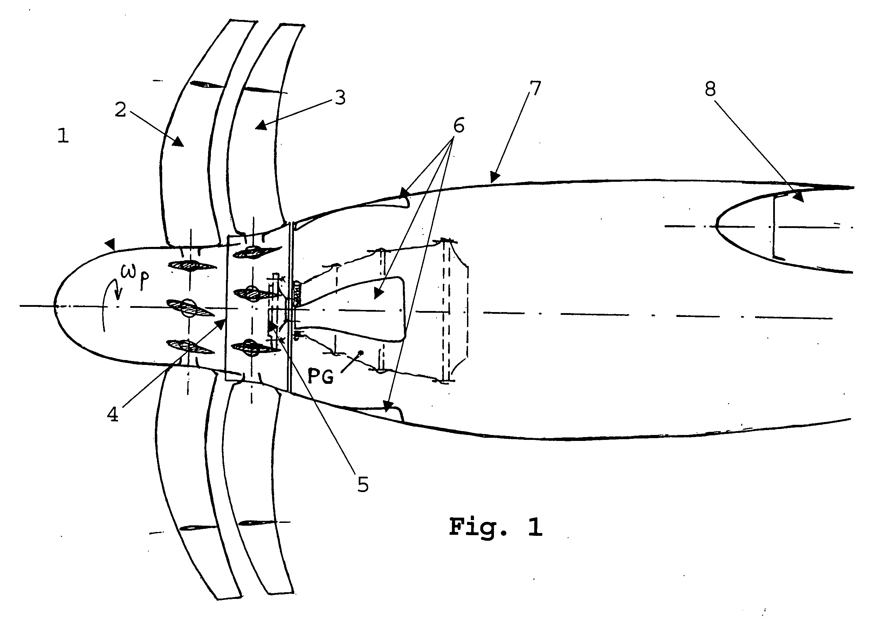

Im Folgenden wird die Erfindung anhand eines Ausführungsbeispiels in Verbindung mit der Zeichnung beschrieben. Dabei zeigt die einzige Figur eine schematische Seitenansicht eines erfindungsgemäßen Turbopropantriebs.

Die Figur zeigt in schematischer Darstellung eine Gondel 7, welche an einem nur teilweise gezeigten Flügel 8 eines Flugzeugs montiert ist. Auf die Darstellung des Luftstrahltriebwerks wurde aus Gründen der Vereinfachung verzichtet.

An der Gondel 7 sind mehrere Lufteinlässe 6 vorgesehen, welche als NACA-Einlässe ausgestaltet sind.

Mit dem Bezugszeichen 5 ist in vereinfachter Darstellung eine Flansch-Kupplung zwischen einem Getriebe (im Einzelnen nicht dargestellt) und einer Propellernabe 1 gezeigt. Auf der Propellernabe 1 sitzt ein vorderer Propeller 2 sowie ein hinterer Propeller 3, die mit gleicher Umfangsgeschwindigkeit drehen. Zwischen den beiden Propellern 2 und 3 ist an der Propellernabe 1 ein Grenzschichtabsaugeinlauf 4 ausgebildet.

Vorteilhaft ist erfindungsgemäß die bereits erwähnte Gewichtsreduzierung.

Ein weiterer Vorteil besteht darin, dass die Effizienz des erfindungsgemäßen Antriebs durch Reduzierung des Einlaufdruckverlustes und durch Reduzierung der Gondel-Stirnfläche gesteigert wird.

Weiterhin wird erfindungsgemäß die Verwendung von Propellergetrieben mit einem kleineren Untersetzungsverhältnis ermöglicht. Hierdurch ergibt sich eine zusätzliche Gewichtsreduzierung des Turbopropantriebs.

Ein weiterer Vorteil besteht in der Lärmreduzierung gegenüber bekannten PTL-Antrieben mit koaxialen und gegenläufigen Propellern.

### Bezugszeichenliste

- 1: Propellernabe
- 2: vorderer Propeller
- 3: hinterer Propeller
- 4: Grenzschichtabsaugeinlauf
- 5: Flansch-Kopplung Getriebe-Propellernabe
- 6: Lufteinlass
- 7: Gondel
- 8: Flügel

## Patentansprüche

1. Propeller-Turbinen-Luftstrahltriebwerk mit einem Luftstrahltriebwerk, welches ein Getriebe und eine Propellernabe (1) umfasst, **dadurch gekennzeichnet, dass** auf der Propellernabe (1) axial versetzt zwei Propeller (2, 3) angeordnet sind, welche sich in derselben Drehrichtung drehen.

2. Triebwerk nach Anspruch 1, **dadurch gekennzeichnet, dass** ein vorderer Propeller (2) in Umfangsrichtung zu einem hinteren Propeller (3) versetzt angeordnet ist.

3. Triebwerk nach Anspruch 1 oder 2, **dadurch gekennzeichnet, dass** der vordere (2) und der hintere (3) Propeller die gleiche Zahl von Propellerblättern aufweisen.

4. Triebwerk nach einem der Ansprüche 1 bis 3, **dadurch gekennzeichnet, dass** die Propellerblätter beider Propeller (2, 3) verstellbar sind.

5. Triebwerk nach einem der Ansprüche 1 bis 4, **dadurch gekennzeichnet, dass** die Propellernabe (1) zwischen den beiden Propellern (2, 3) mit einem ringförmigen Grenzschichtabsaugeinlauf (4) versehen ist.
